# EUROPEAN PATENT SPECIFICATION

(11) **EP 3 270 062 B1**
(45) Date of publication and mention of the grant of the patent: **29.05.2019**
(21) Application number: 17186300.4
(22) Date of filing: 13.06.2016
(51) Int. Cl.: F23R 3/10, F23R 3/04

(54) **PRE-DIFFUSER WITH HIGH CANT ANGLE**
VORDIFFUSOR MIT HOHER SCHRÄGLAGE
PRÉ-DIFFUSEUR AYANT UN ANGLE D'INCLINAISON ÉLEVÉ

(30) Priority: 14.08.2015 US 201514826502
(43) Date of publication of application: 17.01.2018
(62) Divisional of application: 16174254.9
(73) Proprietor: United Technologies Corporation, Farmington, CT 06032 (US)
(72) Inventor: CHEUNG, Albert K., East Hampton, CT Connecticut 06424 (US); ADAMOPOULOS, Christos, Colchester, CT Connecticut 06415 (US)
(74) Representative: Dehns

(56) References cited:
- FR-A1- 2 706 533
- US-A- 5 592 821
- US-B2- 7 181 914

## Description

### BACKGROUND

The subject matter disclosed herein generally relates to pre-diffusers for combustors and, more particularly, to cant angles of pre-diffusers.

In some gas turbine engines, compressor air is discharged into a pre-diffuser, which is part of a combustion section and serves to convert a portion of dynamic pressure to static pressure. A dump diffuser receives the air at the pre-diffuser exit and supplies it to and around an aerodynamically-shaped cowl, located ahead of the combustion chamber (combustor), typically separating the air into three branches. One branch is the cowl passage to supply air to fuel nozzles and for dome cooling. The other branches are outer and inner diameter (OD and ID) shroud passages, respectively, where air is introduced into the combustor for cooling and to complete the combustion process. A small portion of each of these shroud's air bypasses the combustor and is used for turbine cooling. "Axial combustors" use a configuration in which the pre-diffuser and combustor inner and outer liners are generally located symmetrically around the burner axis, resulting in the pre-diffuser and the cowl passage being approximately axially aligned.

US 7181914 B2 discloses a generally annular gas turbine engine pre-diffuser.

US 5592821 A discloses a separator-diffusor for a gas turbine engine having axial walls functioning as a guide vane stage for a compressor.

### SUMMARY

According to one embodiment a gas turbine engine is provided as described in claim 1. The engine includes a combustor configured at a combustor angle relative to an engine axis and a pre-diffuser configured to supply air to the combustor and configured at a diffuser angle relative to the engine axis, wherein the diffuser angle is greater than the combustor angle. A width to height ratio of the pre-diffuser at an exit thereof is between 0.6 and 1.0.

In addition to one or more of the features described above, or as an alternative, further embodiments may include that the diffuser angle is between 8° and 10° relative to the engine axis.

In addition to one or more of the features described above, or as an alternative, further embodiments may include that the combustor angle is between 0° and 16°.

In addition to one or more of the features described above, or as an alternative, further embodiments may include that the pre-diffuser includes a leading edge configured to minimize vortices in air that enters the pre-diffuser.

In addition to one or more of the features described above, or as an alternative, further embodiments may include that the leading edge is arced.

In addition to one or more of the features described above, or as an alternative, further embodiments may include that the pre-diffuser includes one or more struts therein, the struts configured to form passages within the pre-diffuser.

In addition to one or more of the features described above, or as an alternative, further embodiments may include a shroud case surrounding the combustor and at least one of a bearing and a flow path configured below the shroud case relative to the engine axis.

In addition to one or more of the features described above, or as an alternative, further embodiments may include that the pre-diffuser defines a first cross-sectional area at a first end and a second cross-sectional area at a second end, wherein the ratio of the first cross-sectional area to the second cross-sectional area is between 1:1.5 and 1:1.8.

In addition to one or more of the features described above, or as an alternative, further embodiments may include that the combustor is a combustor of an aircraft engine.

According to another embodiment, a method of manufacturing a gas turbine engine is provided as described in claim 9. The method includes installing a combustor at a combustor angle relative to an engine axis and installing a pre-diffuser at a diffuser angle relative to the engine axis, wherein the diffuser angle is greater than the combustor angle. A width to height ratio of the pre-diffuser at an exit thereof is between 0.6 and 1.0.

In addition to one or more of the features described above, or as an alternative, further embodiments may include that the diffuser angle is between 8° and 10° relative to the engine axis.

In addition to one or more of the features described above, or as an alternative, further embodiments may include that the combustor angle is between 0° and 16°. In addition to one or more of the features described above, or as an alternative, further embodiments may include installing the combustor within a shroud case and installing at least one of a bearing and a flow path below the shroud case relative to the engine axis.

In addition to one or more of the features described above, or as an alternative, further embodiments may include that the combustor and the pre-diffuser are installed in an aircraft engine.

Technical effects of embodiments of the present invention include a pre-diffuser for a combustor with a relatively high cant angle. Further technical effects include a combustor with a cant angle that is lower than the pre-diffuser cant angle and a combustor having greater space for bearings and/or flow passages. Further technical effects include a combustor with closer nozzles to enable a higher quality exit temperature from the combustor. Further technical effects include a pre-diffuser with an arced and/or strutted configuration that is configured to improve airflow through the pre-diffuser.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present invention are apparent from the following detailed description taken in conjunction with the accompanying drawings in which:
FIG. 1 is a schematic illustration of a prior configuration of a pre-diffuser and combustor;
FIG. 2 is a schematic illustration of a configuration of a pre-diffuser and combustor in accordance with a non-limiting embodiment of the present invention;
FIG. 3A is a schematic illustration of a detailed view of a pre-diffuser in accordance with a non-limiting embodiment of the present invention;
FIG. 3B is a schematic rear view of the pre-diffuser of FIG. 3A; and
FIG. 4 is a non-limiting embodiment of a manufacturing process for forming an engine in accordance with the present invention.

### DETAILED DESCRIPTION

As shown and described herein, various features of the invention will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

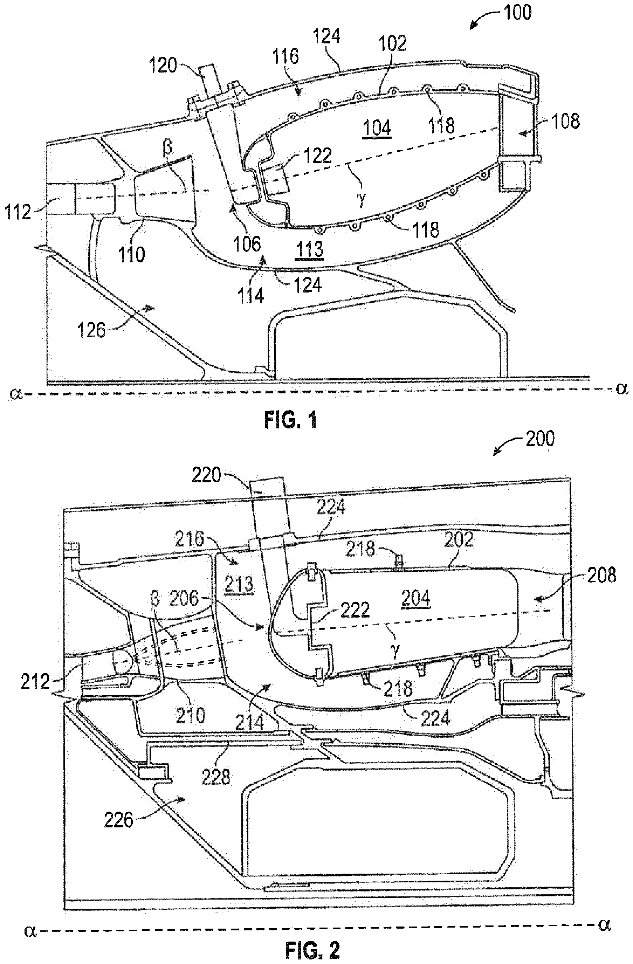

FIG. 1 is a schematic illustration of a configuration of a combustion section of an engine. As shown, an engine 100 includes a combustor 102 defining a combustion chamber 104. The combustor 102 includes an inlet 106 and an outlet 108 through which air may pass. The air may be supplied to the combustor 102 by a pre-diffuser 110.

In the configuration shown in FIG. 1, air may be supplied from a compressor into an exit guide vane 112. The exit guide vane 112 is configured to direct the airflow into the pre-diffuser 110, which then directs the airflow toward the combustor 102. The combustor 102 and the pre-diffuser 110 are separated by a shroud chamber 113 that contains the combustor 102 and includes an inner diameter branch 114 and an outer diameter branch 116. As air enters the shroud chamber 113 a portion of the air may flow into the combustor inlet 106, a portion may flow into the inner diameter branch 114, and a portion may flow into the outer diameter branch 116. The air from the inner diameter branch 114 and the outer diameter branch 116 may then enter the combustion chamber 104 by means of one or more nozzles 118. The air may then exit the combustion chamber 104 through the combustor outlet 108. At the same time, fuel may be supplied into the combustion chamber 104 from a fuel injector 120 and a pilot nozzle 122, which may be ignited within the combustion chamber 104.

The combustor 102 of the engine 100 may be housed within a shroud case 124 which may define the shroud chamber 113. A cavity 126 may surround the shroud case 124 to enable air passage and/or supply to various components or portions of the engine 100.

The engine 100 may define an axis α with various components arranged relative to the axis α. For example, as shown in FIG. 1, the pre-diffuser 110 may be angled at a diffuser cant angle β with respect to an axis α of the engine 100 and the combustor 102 may be angled at a combustor cant angle γ with respect to the axis α. As shown, the diffuser cant angle β is a relatively low cant angle and is a lower cant angle than the combustor cant angle γ. In some configurations, the diffuser cant angle β may be between 0° and 8°, with the majority of traditional configurations having a diffuser cant angle β of between 0° and 4°. In contrast, the combustor 102 may have a relatively steep cant angle of between 12° and 16°. This configuration has been used to minimize pressure gradients in the boundary layer of the pre-diffuser created by the cant angle which can lead to separation. The canted pre-diffuser area-ratio being part of an annulus may expand more aggressively than an axial pre-diffuser. The aggressive area-ratio over a fixed length may be prone to cause boundary layer separation inside the pre-diffuser. The separation inside the pre-diffuser may cause higher pressure loss than intended,

Turning now to FIG. 2, a schematic illustration of a configuration of a pre-diffuser and combustor in accordance with a non-limiting embodiment of the present invention is shown. As will be appreciated by those of skill in the art, FIG. 2 may represent an aircraft engine. However, embodiments disclosed herein are not limited to aircraft applications, but rather FIG. 2 is presented for illustrative and explanatory purposes.

In FIG. 2, an engine 200 includes similar components as the engine 100, includes a combustor 202 with a combustion chamber 204 having an inlet 206 and an outlet 208. A pre-diffuser 210 is configured to supply air into a shroud cavity 213 from an exit guide vane 212. Air may then flow into an inner diameter branch 214, an outer diameter branch 216, and into the combustor inlet 206. The air from the inner diameter branch 214 and the outer diameter branch 216 may enter the combustion chamber 204 by means of one or more nozzles 218. The air may then exit the combustion chamber 204 through the combustor outlet 208. At the same time, fuel may be supplied into the combustion chamber 204 from a fuel injector 220 and a pilot nozzle 222, which may be ignited within the combustion chamber 204.

Similar to the configuration described above, the combustion section of the engine 200 may be surrounded by a shroud case 224 which may define the shroud chamber 213. A cavity 226 may surround the shroud case 224 to enable air passage and/or supply to various components or portions of the engine 200.

The engine 200 may define an axis α with various components arranged relative to the axis α, similar to the configuration of the engine 100 in FIG. 1. For example, as shown in FIG. 2, the pre-diffuser 210 may be angled at a diffuser cant angle β and the combustor 202 may be angled at a combustor cant angle γ. Diffuser cant angle β and combustor cant angle γ may be set relative to the axis α. As shown, the diffuser cant angle β is a relatively high cant angle and is a higher cant angle than the combustor cant angle γ. In some configurations, the diffuser cant angle β may be between 8° and 10°. In contrast, the combustor 102 may have a relatively low cant angle of between 0° and 16°, which may be configured based on a turbine inlet requirement, e.g., the turbine inlet may have a high radial elevation.

In some embodiments, the combustor cant angle γ may be near zero or horizontal. That is, an axis passing through the center of the combustor 202 may be parallel to the engine axis α. In other embodiments, the combustor 202 may be only slightly angled such that the combustor cant angle γ is minimal.

Such a configuration may increase the volume of space available within the engine 200. In the non-limiting embodiment shown in FIG. 2, additional space or room is created beneath the shroud case 224, i.e., on the inner diameter side of the engine. This configuration may enable the addition of additional bearings and/or flow passages within the engine 200. For example, a flow passage 228 may be positioned beneath the shroud case 224 and within the cavity 226, and in some configurations may be a thrust-balancing air flow path.

Further, because the combustor 202 may be positioned substantially horizontal, at any given radial position within the combustor 202 the pitch is the same. As a result, the pitch may be the same at both the inlet 206 and the outlet 208, which may result in closer together fuel nozzles, and thus a higher quality exit temperature from the combustor 202 as compared to traditional configurations. In other terms, a pitch-to-height ratio of the combustor 202 may be equal at the inlet 206 and at the outlet 208.

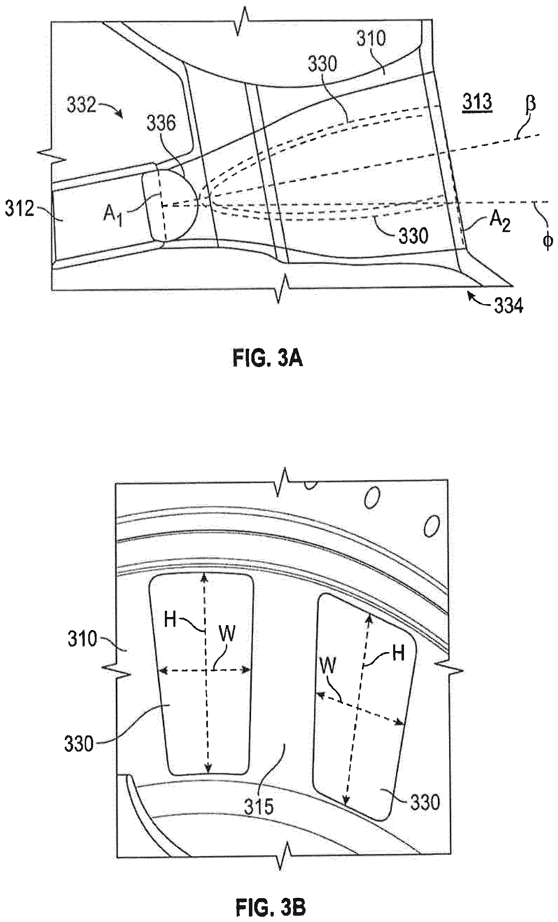

Turning now to FIG. 3A, a detailed view of a high cant angle pre-diffuser in accordance with a non-limiting embodiment of the invention is shown. The pre-diffuser 310 may be configured in an engine similar to the configuration shown in FIG. 2, e.g., receive air from exit guide vane 312 and dispense it into a shroud cavity 313. The pre-diffuser 310 is a strutted pre-diffuser that is separated into a plurality of channels or passages 330 that are configured to channel and direct the air flow passing through the pre-diffuser. For example, in some embodiments, the pre-diffuser 310 may be bifurcated into twenty-four separate local passages 330. Those of skill in the art will appreciate that the number and configuration of the passages within the pre-diffuser may be varied without departing from the scope of the invention as defined by the appended claims. The struts are full length struts that minimize circumferential pressure field communication within the pre-diffuser 310.

The passages 330 extend from a first end 332 of the pre-diffuser 310 to a second end 334 of the pre-diffuser 310. As shown, the first end 332 is proximal to and in fluid communication with the exit guide vane 312. The second end 334 is proximal to and in fluid communication with the shroud cavity 313.

Further, as shown in FIG. 3A, the pre-diffuser 310 is positioned at a high diffuser cant angle β relative to an axis of an engine the pre-diffuser is part of. As shown in FIG. 3A, engine angle φ is an angle that is parallel to an engine axis (not shown). Diffuser cant angle β may be between 8° and 10° inclined from engine angle φ, and thus may be a highly canted pre-diffuser.

Also shown in FIG. 3A, the pre-diffuser 310 may include a curved or contoured leading edge 336. In some embodiments, the leading edge 336 may be curved or contoured to form an arc or bowl such that the air flowing from the exit guide vane 312 may smoothly enter the pre-diffuser 310. For example, the leading edge 336 may be configured to minimize vortices that may form when air from the exit guide vane 312 enters the pre-diffuser 310.

The pre-diffuser 310, as shown, may be relatively narrow at the first end 332 with respect to a wider second end 334. The cross-sectional area of the pre-diffuser 310 thus increases from the first end 332 to the second end 334. In some embodiments, the relationship between a first end area A₁ and a second end area A₂ may be represented by R = A₂/A₁. In some embodiments, R may be equal to a value between 1.5 and 1.8. Thus, for example, if A₁ is 1.0 square inches, A₂ may be equal to between 1.5 square inches and 1.8 square inches, depending on the desired configuration. Those of skill in the art will appreciate that other ratios may be employed without departing from the scope of the invention.

Referring now to FIG. 3B, a schematic rear view of the pre-diffuser of FIG. 3A is shown. Specifically, FIG. 3B represents viewing the pre-diffuser 310 from the shroud cavity 313. FIG. 3B shows the second end area A₂ in plan view, such that the width W and the height H of the pre-diffuser 310 at the second end, or exit from the pre-diffuser, are indicated. In some embodiments, the exit aspect ratio, i.e., W/H, of the passage may be set at a specific ratio. For example, and according to the invention, by having the aspect ratio of width W to height H (i.e., W/H) between 0.6-1.0, attachment of the boundary layer on the outer diameter and inner diameter ("OD" and "ID") of the pre-diffuser package may be ensured. The aspect ratio can be designed to a desired value by changing the width of the strut 315.

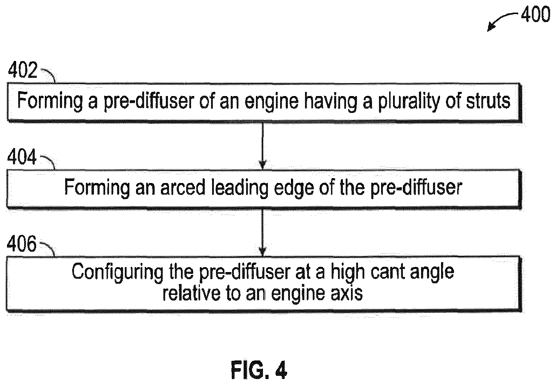

Turning now to FIG. 4, a non-limiting manufacturing process for forming an engine in accordance with the present invention is shown. The process 400 may be part of a larger manufacturing process of an engine and may include other steps or aspects that are not shown or disclosed herein, but are understood by those of skill in the art. Further, although a specific order of steps is provided in process 400, those of skill in the art will appreciate that the order may be varied and/or various steps may be performed simultaneously or in tandem, depending on the specific manufacturing process employed.

The process 400 is provided for manufacturing a pre-diffuser within an engine, with the pre-diffuser configured as part of an engine. A first step may be to form a pre-diffuser with a plurality of struts within the pre-diffuser (step 402). Then, a leading edge contour may be formed (step 404). The leading edge contour may be configured to minimize vortices that may form when air impacts the leading edge. Finally, the pre-diffuser may be installed within an engine with a cant angle between 8° and 10° relative to an axis of the engine (step 406). This cant angle may be a high cant angle for the pre-diffuser, which may enable other components of the engine to be configured in an advantageous way. For example, with a pre-diffuser installed pursuant to process 400, a combustor may be configured at a low cant angle, thus enabling larger space within the engine to accommodate more flow paths and/or additional bearings or other components. Alternatively, or in addition thereto, such a configuration of the pre-diffuser may enable a smaller and/or lighter engine to be manufactured.

Advantageously, embodiments described herein provide an improved configuration for an engine. By increasing the cant angle of the pre-diffuser the cant angle of the combustor may be lowered, thus increasing the space within the engine or maximizing the allowed angle of the combustor to accommodate a highly radially elevated turbine inlet within a short axial engine length to save weight. Accordingly, advantageously, additional components may be added to the engine that may not previously been possible, including, but not limited to bearings, air passages, etc. Further, such increase in the cant angle of the pre-diffuser may enable minimization of pattern factors. Advantageously, embodiments disclosed herein enable a high degree of flexibility in the configuration and manufacture of engines.

Further, in accordance with some embodiments, improved airflow through the pre-diffuser may be possible by the addition of an arced leading edge and/or the addition of struts within the pre-diffuser. Advantageously, an arced leading edge may minimize vortices within the airflow as it passes through the pre-diffuser. Further, the struts may be configured to minimize circumferential pressure field communication within the pre-diffuser.

Although certain ranges of angles and/or ratios have been described herein, those of skill in the art will appreciate that these values are merely for example and other ranges may be used without departing from the scope of the invention. Further, although in the described embodiment the pre-diffuser has a first angle range and the combustor has a second angle range, those of skill in the art will appreciate that these angle ranges are not necessarily directly related or dependent on each other. Thus, other angle configurations may be employed without departing from the scope of the invention.

Accordingly, the present invention is not to be seen as limited by the foregoing description, but is only limited by the scope of the appended claims.

## Claims

1. A gas turbine engine (100; 200) comprising:
a combustor (102; 202) configured at a combustor angle (γ) relative to an engine axis (α);
wherein the gas turbine engine further comprises:
a strutted pre-diffuser (110; 210; 310) configured to supply air to the combustor and configured at a diffuser angle (β) relative to the engine axis, wherein the diffuser angle is greater than the combustor angle, wherein the pre-diffuser (310) includes a plurality of struts (315) therein, the struts separating the strutted pre-diffuser into a plurality of passages (330), the plurality of struts being full length struts that minimize circumferential pressure field communication within the pre-diffuser, wherein each passage extends from a first end (332) of the pre-diffuser to an exit second end (334) of the strutted pre-diffuser,
wherein a width (W) to height (H) ratio of the pre-diffuser passages (330) at the exit second end is between 0.6 and 1.0.

2. The gas turbine engine (100; 200) of claim 1, wherein the diffuser angle (β) is between 8° and 10° relative to the engine axis (α).

3. The gas turbine engine (100; 200) of any of the preceding claims, wherein the combustor angle (γ) is between 0° and 16°.

4. The gas turbine engine (100; 200) of any of the preceding claims, wherein the pre-diffuser (310) includes a leading edge (336) configured to minimize vortices in air that enters the pre-diffuser.

5. The gas turbine engine (100; 200) of claim 4, wherein the leading edge (336) is arced.

6. The gas turbine engine (100; 200) of any of the preceding claims, further comprising:
a shroud case (124; 224) surrounding the combustor (102; 202); and
at least one of a bearing and a flow path configured below the shroud case relative to the engine axis (α).

7. The gas turbine engine (100; 200) of any of the preceding claims, wherein the pre-diffuser (310) defines a first cross-sectional area (A₁) at a first end (332) and a second cross-sectional area (A₂) at a second end (334), wherein the ratio (R) of the first cross-sectional area to the second cross-sectional area is between 1:1.5 and 1:1.8.

8. The gas turbine engine (100; 200) of any of the preceding claims, wherein the combustor (102; 202) is a combustor of an aircraft engine.

9. A method of manufacturing a gas turbine engine (100; 200) comprising:
installing a combustor (102; 202) at a combustor angle (γ) relative to an engine axis (α);
installing a strutted pre-diffuser (110; 210; 310) at a diffuser angle (β) relative to the engine axis, wherein the diffuser angle is greater than the combustor angle, wherein the pre-diffuser (310) includes a plurality of struts (315) separating the strutted pre-diffuser into a plurality of passages (330), the plurality of struts being full length struts that minimize circumferential pressure field communication within the pre-diffuser, wherein each passage extends from a first end (332) of the pre-diffuser to an exit second end (334) of the strutted pre-diffuser,
wherein a width (W) to height (H) ratio of the pre-diffuser passages (330) at the exit second end is between 0.6 and 1.0.

10. The method of claim 9, wherein the diffuser angle (β) is between 8° and 10° relative to the engine axis (α).

11. The method of any of claims 9-10, wherein the combustor angle (γ) is between 0° and 16°.

12. The method of any of claims 9-11, further comprising:
installing the combustor (102; 202) within a shroud case (124; 224); and
installing at least one of a bearing and a flow path below the shroud case relative to the engine axis (α).

13. The method of any of claims 9-12, wherein the combustor (102; 202) and the pre-diffuser (110; 210; 310) are installed in an aircraft engine (100; 200).

## Patentansprüche

1. Gasturbinentriebwerk (100; 200), umfassend:
eine Brennkammer (102; 202), die bezogen auf eine Triebwerksachse (α) in einem Brennkammerwinkel (γ) konfiguriert ist;
wobei das Gasturbinentriebwerk ferner Folgendes umfasst:
einen verstrebten Vordiffusor (110; 210; 310), der konfiguriert ist, um der Brennkammer Luft zuzuführen, und bezogen auf die Triebwerksachse in einem Diffusorwinkel (β) konfiguriert ist, wobei der Diffusorwinkel größer ist als der Brennkammerwinkel, wobei der Vordiffusor (310) eine Vielzahl von Streben (315) darin beinhaltet, wobei die Streben den verstrebten Vordiffusor in eine Vielzahl von Durchgängen (330) teilen, wobei die Vielzahl von Streben Streben voller Länge sind, die eine Druckfeldübertragung in Umfangsrichtung in dem Vordiffusor minimieren, wobei sich jeder Durchgang von einem ersten Ende (332) des Vordiffusors zu einem zweiten Austrittsende (334) des verstrebten Vordiffusors erstreckt,
wobei ein Verhältnis einer Breite (W) zu einer Höhe (H) der Vordiffusordurchgänge (330) an dem zweiten Austrittsende zwischen 0,6 und 1,0 liegt.

2. Gasturbinentriebwerk (100; 200) nach Anspruch 1, wobei der Diffusorwinkel (β) bezogen auf die Triebwerksachse (α) zwischen 8° und 10° liegt.

3. Gasturbinentriebwerk (100; 200) nach einem der vorangehenden Ansprüche, wobei der Brennkammerwinkel (γ) zwischen 0° und 16° liegt.

4. Gasturbinentriebwerk (100; 200) nach einem der vorangehenden Ansprüche, wobei der Vordiffusor (310) eine Vorderkante (336) beinhaltet, die konfiguriert ist, um Wirbel in Luft zu minimieren, die in den Vordiffusor eintritt.

5. Gasturbinentriebwerk (100; 200) nach Anspruch 4, wobei die Vorderkante (336) gekrümmt ist.

6. Gasturbinentriebwerk (100; 200) nach einem der vorangehenden Ansprüche, ferner umfassend:
einen Verkleidungskasten (124; 224), der die Brennkammer (102; 202) umgibt; und
zumindest eines von einem Lager und einem Strömungspfad, das bzw. der bezogen auf die Triebwerksachse (α) unter dem Verkleidungskasten konfiguriert ist.

7. Gasturbinentriebwerk (100; 200) nach einem der vorangehenden Ansprüche, wobei der Vordiffusor (310) einen ersten Querschnittsbereich (A₁) an einem ersten Ende (332) und einen zweiten Querschnittsbereich (A₂) an einem zweiten Ende (334) definiert, wobei das Verhältnis (R) des ersten Querschnittsbereichs zu dem zweiten Querschnittsbereich zwischen 1:1,5 und 1:1,8 liegt.

8. Gasturbinentriebwerk (100; 200) nach einem der vorangehenden Ansprüche, wobei die Brennkammer (102; 202) eine Brennkammer eines Luftfahrzeugs ist.

9. Verfahren zum Herstellen eines Gasturbinentriebwerks (100; 200), umfassend:
Einbauen einer Brennkammer (102; 202) in einem Brennkammerwinkel (γ) bezogen auf eine Triebwerksachse (α);
Einbauen eines verstrebten Vordiffusors (110; 210; 310) in einem Diffusorwinkel (β) bezogen auf den Triebwerkswinkel, wobei der Diffusorwinkel größer ist als der Brennkammerwinkel, wobei der Vordiffusor (310) eine Vielzahl von Streben (315) beinhaltet, die den verstrebten Vordiffusor in eine Vielzahl von Durchgängen (330) teilen, wobei die Vielzahl von Streben Streben voller Länge sind, die eine Druckfeldübertragung in Umfangsrichtung in dem Vordiffusor minimieren, wobei sich jeder Durchgang von einem ersten Ende (332) des Vordiffusors zu einem zweiten Austrittsende (334) des verstrebten Vordiffusors erstreckt,
wobei ein Verhältnis einer Breite (W) zu einer Höhe (H) der Vordiffusordurchgänge (330) an dem zweiten Austrittsende zwischen 0,6 und 1,0 liegt.

10. Verfahren nach Anspruch 9, wobei der Diffusorwinkel (β) bezogen auf die Triebwerksachse(α) zwischen 8° und 10° liegt.

11. Verfahren nach einem der Ansprüche 9-10, wobei der Brennkammerwinke (γ) zwischen 0° und 16° liegt.

12. Verfahren nach einem der Ansprüche 9-11, ferner umfassend:
Einbauen der Brennkammer (102; 202) in einem Verkleidungskasten (124; 224); und
Einbauen von zumindest einem von einem Lager und einem Strömungspfad unter dem Verkleidungskasten bezogen auf die Triebwerksachse (α).

13. Verfahren nach einem der Ansprüche 9-12, wobei die Brennkammer (102; 202) und der Vordiffusor (110; 210; 310) in ein Luftfahrzeug (100; 200) eingebaut werden.

## Revendications

1. Moteur à turbine à gaz (100 ; 200) comprenant :
une chambre de combustion (102 ; 202) conçue au niveau d'un angle de chambre de combustion (γ) par rapport à un axe de moteur (α) ;
dans lequel le moteur à turbine à gaz comprend en outre :
un pré-diffuseur à entretoises (110 ; 210 ; 310) conçu pour fournir de l'air à la chambre de combustion et conçu au niveau d'un angle de diffuseur (β) par rapport à l'axe de moteur, dans lequel l'angle de diffuseur est supérieur à l'angle de chambre de combustion, dans lequel le pré-diffuseur (310) inclut une pluralité d'entretoises (315) à l'intérieur, les entretoises séparant le pré-diffuseur à entretoises en une pluralité de passages (330), la pluralité d'entretoises étant des entretoises de longueur complète qui réduisent la communication de champ de pression circonférentielle à l'intérieur du pré-diffuseur, dans lequel chaque passage s'étend d'une première extrémité (332) du pré-diffuseur à une seconde extrémité de sortie (334) du pré-diffuseur à entretoises,
dans lequel un rapport largeur (W) sur hauteur (H) des passages de pré-diffuseur (330) au niveau de la seconde extrémité de sortie se situe entre 0,6 et 1,0.

2. Moteur à turbine à gaz (100 ; 200) selon la revendication 1, dans lequel l'angle de diffuseur (β) se situe entre 8° et 10° par rapport à l'axe de moteur (α).

3. Moteur à turbine à gaz (100 ; 200) selon l'une quelconque des revendications précédentes, dans lequel l'angle de chambre de combustion (γ) se situe entre 0° et 16°.

4. Moteur à turbine à gaz (100 ; 200) selon l'une quelconque des revendications précédentes, dans lequel le pré-diffuseur (310) inclut un bord d'attaque (336) conçu pour réduire les tourbillons dans l'air qui entre dans le pré-diffuseur.

5. Moteur à turbine à gaz (100 ; 200) selon la revendication 4, dans lequel le bord d'attaque (336) est arqué.

6. Moteur à turbine à gaz (100 ; 200) selon l'une quelconque des revendications précédentes, comprenant en outre :
un boîtier de protection (124 ; 224) entourant la chambre de combustion (102 ; 202); et
au moins l'un d'un palier et d'un trajet d'écoulement conçu en dessous du boîtier de protection par rapport à l'axe de moteur (α) .

7. Moteur à turbine à gaz (100 ; 200) selon l'une quelconque des revendications précédentes, dans lequel le pré-diffuseur (310) définit une première zone de section transversale (A₁) au niveau d'une première extrémité (332) et une seconde zone de section transversale (A₂) au niveau d'une seconde extrémité (334), dans lequel le rapport (R) de la première zone de section transversale à la seconde zone de section transversale se situe entre 1:1,5 et 1:1,8.

8. Moteur à turbine à gaz (100 ; 200) selon l'une quelconque des revendications précédentes, dans lequel la chambre de combustion (102 ; 202) est une chambre de combustion d'un moteur d'aéronef.

9. Procédé de fabrication d'un moteur à turbine à gaz (100 ; 200) comprenant :
l'installation d'une chambre de combustion (102; 202) au niveau d'un angle de chambre de combustion (γ) par rapport à un axe de moteur (α) ;
l'installation d'un pré-diffuseur à entretoises (110 ; 210 ; 310) au niveau d'un angle de diffuseur (β) par rapport à l'axe de moteur, dans lequel l'angle de diffuseur est supérieur à l' angle de chambre de combustion, dans lequel le pré-diffuseur (310) inclut une pluralité d'entretoises (315) séparant le pré-diffuseur à entretoises en une pluralité de passages (330), la pluralité d'entretoises étant des entretoises de longueur complète qui réduisent la communication de champ de pression circonférentielle à l'intérieur du pré-diffuseur, dans lequel chaque passage s'étend d'une première extrémité (332) du pré-diffuseur à une seconde extrémité de sortie (334) du pré-diffuseur à entretoises,
dans lequel un rapport largeur (W) sur hauteur (H) des passages de pré-diffuseur (330) au niveau de la seconde extrémité de sortie se situe entre 0,6 et 1,0.

10. Procédé selon la revendication 9, dans lequel l'angle de diffuseur (β) se situe entre 8° et 10° par rapport à l'axe de moteur (α).

11. Procédé selon l'une quelconque des revendications 9 à 10, dans lequel l'angle de chambre de combustion (γ) se situe entre 0° et 16°.

12. Procédé selon l'une quelconque des revendications 9 à 11, comprenant en outre :
l'installation de la chambre de combustion (102 ; 202) à l'intérieur d'un boîtier de protection (124 ; 224) ; et
l'installation d'au moins l'un d'un palier et d'un trajet d'écoulement en dessous du boîtier de protection par rapport à l'axe de moteur (α).

13. Procédé selon l'une quelconque des revendications 9 à 12, dans lequel la chambre de combustion (102 ; 202) et le pré-diffuseur (110 ; 210 ; 310) sont installés dans un moteur d'aéronef (100 ; 200).
